# EUROPÄISCHE PATENTSCHRIFT

(11) **EP 0 339 271 B1**
(45) Veröffentlichungstag und Bekanntmachung des Hinweises auf die Patenterteilung: **04.08.1993**
(21) Anmeldenummer: 89105381.1
(22) Anmeldetag: 25.03.1989
(51) Int. Cl.: H02K 3/52, H02K 1/08, H02K 3/20

(54) **Lamellierter Pol**
Laminated pole
Pôle lamellé

(30) Priorität: 26.04.1988 CH 1557/88
(43) Veröffentlichungstag der Anmeldung: 02.11.1989
(73) Patentinhaber: ASEA BROWN BOVERI AG, 5400 Baden (CH)
(72) Erfinder: Schwanda, Josef, CH-5242 Lupfig (CH)

(56) Entgegenhaltungen:
- DE-B- 1 070 284
- DE-C- 859 504
- FR-A- 2 444 360
- US-A- 1 695 391
- US-A- 1 828 578

## Beschreibung

### TECHNISCHES GEBIET

Die Erfindung bezieht sich auf einen lamellierten Pol für eine elektrische Maschine mit ausgeprägten Polen.

Ausgangspunkt für die Erfindung bildet dabei ein Stand der Technik, wie er beispielsweise durch die FR-A-2 444 360 bzw. die inhaltsgleiche CH-A-632 877 vermittelt ist.

### TECHNOLOGISCHER HINTERGRUND UND STAND DER TECHNIK

Rotorpole von elektrischen Maschinen mit ausgeprägten Polen wurden je nach elektrischer oder mechanischer Beanspruchung massiv oder lamelliert (Schichtpol) ausgeführt. Massivpole aus geschmiedetem Stahl oder Stahlguss weisen infolge des relativ kleinen ohmschen Widerstandes höhere Zusatzverluste auf. Unter Zusatzverlusten sind in diesem Fall im wesentlichen die Wirbelstromverluste, hervorgerufen durch die vom Ankerstrom erzeugten höheren Feldharmonischen, sowie die vom Hauptfeld durch die Nutung verursachten Pulsationsverluste zu verstehen. Massivpole wirken wie Leiterstäbe einer Käfigankerwicklung, so dass bei asynchronen Betriebszuständen in ihnen grosse Ströme fliessen können.

Durch das Führen grosser Ströme und die grosse Energieaufnahmefähigkeit eignet sich der Massivpol besonders für asynchrones Anfahren grosser Synchron-Motor-Generatoren.

Lamellierte Pole haben einen grossen ohmschen Widerstand in Längsrichtung, die Zusatzverluste sind entsprechend geringer, ebenso aber auch ihre dämpfende Wirkung. Für die erforderliche Betriebsstabilität ist der Schichtpol daher mit einer Dämpferwicklung versehen. Zur Herstellung von Schichtpolen wird von gestanzten Einzelblechen von etwa 1 mm Dicke ausgegangen. Die Bleche werden in einer Presse über einen Dorn geschichtet. Nach Erreichen des hohen axialen Pressdruckes wird der Dorn auf beiden Stirnenden mit massiven Polendplatten verschweisst. Die hohe Flächenpressung und zusätzliche Schweissnähte an den Aussenkonturen ergeben einen mechanisch kompakten Körper, der keiner weiteren Bearbeitung unterworfen werden muss, da die Ausbildung der Tragklauen, Belüftungsschlitze, Abstütznocken für die Polwicklung usw. in den Stanz- bzw. Schichtoperationen enthalten ist (Firmenzeitschrift "Synchronmaschinen für Wasserkraftanlagen" CH-T 130 082 D aus dem Jahre 1977 der BBC Aktiengesellschaft Brown, Boveri + Cie., Baden/Schweiz, insbesondere S. 32).

Für langsamlaufende Synchronmaschinen und für polumschaltbare Maschinen insbesondere für Hydrogeneratoren mit hohen Polzahlen erfordern die aus massivem Stahl hergestellten Polendplatten ein vergleichsweise aufwendiges Herstellungsverfahren. Sie beeinträchtigen darüber hinaus die aus der Lamellierung des Polkörpers resultierenden, im vorstehenden angedeuteten Wirkungen auf das Betriebsverhalten der Maschine.

Der lamellierte Pol nach der CH-PS 632 877 vermeidet die vorgenannten Unzulänglichkeiten durch Lamellierung und Zusammenschweissen der Polendplatten. Auf diese Weise vermindert sich der fertigungstechnische Aufwand um etwa 40 bis 50 % desjenigen bei Verwendung massiver Polendplatten. ein weiterer Vorteil besteht darin, dass die Polendplatte gewichtsmässig leichter ist, da durch die Lamellierung der Füllfaktor ≦ 98 % ist. Mit dieser Gewichtseinsparung geht die Verminderung der Beanspruchungen der Polverankerungen einher. Auch sind die Pulsationsverluste der erfindungsgemäss lamellierten Endplatte geringer als diejenigen einer massiven Ausführung.

Die Polplatten weisen - abhängig von der axialen Länge des Polkörpers - eine Dicke zwischen 40 und 60 mm auf und sind aus bis zu 3 mm dicken Einzelblechen aufgebaut und zumindest an der Aussenkontur an mehreren Stellen miteinander verschweisst. Die Blechstärke entspricht derjenigen der Polbleche des Polkörpers. Sie haben dieselben Aussenkonturen wie die Polbleche des Polkörpers und können somit mit ein und demselben Stanzwerkzeug bearbeitet werden.

Die Bleche der Polendplatten weisen neben Durchgangsbohrungen zum Verspannen des gesamten Poles eine oder mehrere miteinander fluchtende Ausnehmungen auf, durch welche Bolzen entsprechenden Querschnitts gesteckt sind, die ihrerseits mit den Einzelblechen an den beiden Stirnflächen der Polendplatte verschweisst sind. Sie dienen als stirnseitige Auflagen für die Polspulen.

Aus der DE-B-1 070 284 ist ein lamellierter Pol für eine elektrische Maschine mit ausgeprägten Polen bekannt, bei dem die Polbleche zwischen zwei Endplatten eingespannt sind. Diese Endplatten überdecken mit Ausnahme des den Polkörper überragenden Teils die gesamte Stirnfläche des Pols. Das Zusammenpressen erfolgt durch Schraubbolzen oder Nieten, die mehr oder weniger gleichmässig über die gesamte Polstirnfläche verteilt sind.

Gegenstand der US-A-1 695 391 ist eine elektrische Synchronmaschine mit einer zusätzlichen Käfigläuferwicklung als Anlasshilfe. Der Kurzschlussring dient dabei gleichzeitig der Abstützung der Polspulen. Die Polbleche sind dabei zwischen die Kurzschlussringen eingespannt und im Bereich der Polkappe mittels durchgehender Bolzen oder Nieten zusammengespannt.

### Kurze Beschreibung der Erfindung

Ausgehend vom Stand der Technik liegt der Erfindung die Aufgabe zugrunde, einen lamellierten Pol zu schaffen, der alle Vorteile der bekannten Pole aufweist und darüber hinaus noch einfacher und wirtschaftlicher zu fertigen ist.

Die Lösung dieser Aufgabe erfolgt durch einen lamellierten Pol mit den im Patentanspruch 1 angegebenen Merkmalen.

Bei einer derartigen Ausbildung des Pols ist ein Verschweissen der Endbleche nicht mehr notwendig, auch müssen keine zusätzlichen Abstützelemente für die Polspulen mehr angebracht werden. Darüber hinaus eignen sich die Vorsprünge in hervorragender Weise zur Befestigung der Dämpferbleche bzw. der lamellierten Verbindungen.

Weitere Einzelheiten der Erfindung ergeben sich aus der nachfolgenden Beschreibung eines in der Zeichnung dargestellten Ausführungsbeispiels.

### KURZE BESCHREIBUNG DER ZEICHNUNGEN

In der Zeichnung zeigt:
- Fig. 1: einen Längsschnitt durch den Pol einer elektrischen Maschine;
- Fig. 2: eine Ansicht auf die Stirnseite des Pols gemäss Fig. 1;
- Fig. 3: eine Draufsicht auf den Pol gemäss Fig. 1.

### AUSFÜHRLICHE BESCHREIBUNG DER ERFINDUNG

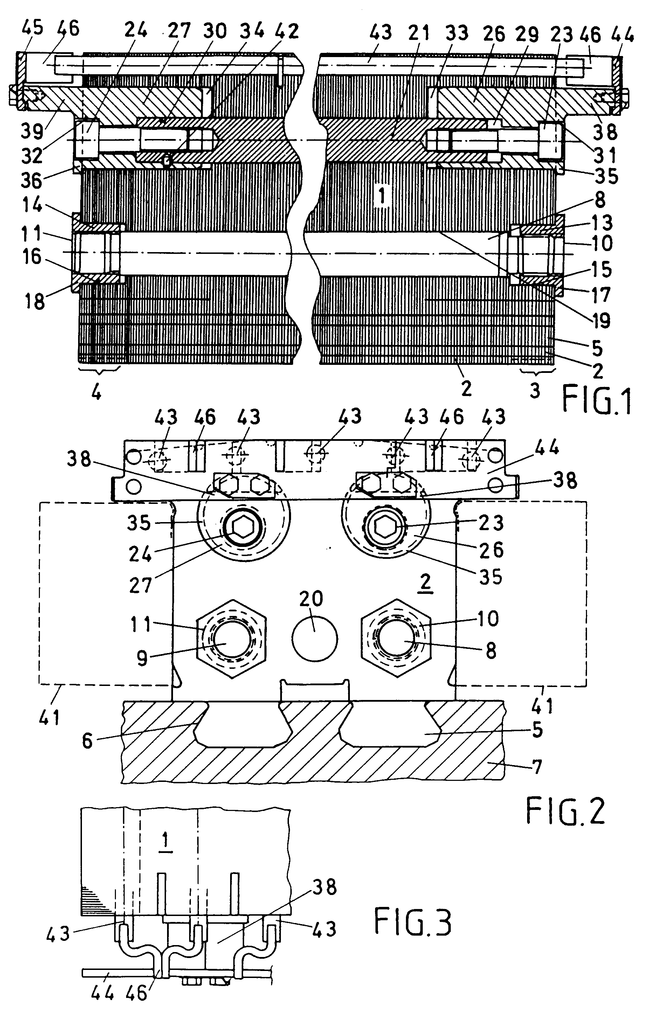

Der Pol 1 nach Fig. 1 ist in bekannter Weise aus Einzelblechen 2 aufgebaut, deren Kontur aus Fig. 2 hervorgeht. Der durch die geschweiften Klammern angedeutete Endbereich 3, 4 ist gleichfalls aus Einzelblechen 2 aufgebaut und bildet hinsichtlich seiner Funktion Polendplatten.

Am radial innenliegenden Ende des Pols sind im Beispielsfall paarig angeordnete schwalbenschwanzförmige Polklauen 5 einstückig mit den Einzelblechen 2 vorgesehen, die in entsprechende schwalbenschwanzförmige Nuten 6 im Rotorring 7 verkeilt sind

Der Pol 1 ist im achsnahen Abschnitt mittels zwei symmetrisch zur Mittelachse angeordneten Spannbolzen 8, 9 und zugehörigen Spannmuttern 10, 11 zusammengepresst. Jede Spannmutter weist eine zylindrische mit einem Innengewinde versehene Passzylinder 13, 14 auf, der vollständig innerhalb einer Bohrung 15, 16 entsprechenden Durchmessers im Endbereich 3 bzw. 4 des Pols gelegen ist. Die Passzylinder 13, 14 gehen aussen in eine flanschartige Erweiterung 17, 18 mit sechseckiger Aussenkontur über, welche als Druckverteilungselement wirkt.

Die den Pol vollständig in Längsrichtung durchsetzende Bohrung 19 ist im Durchmesser gleich gross wie der Aussendurchmesser der Spannbolzen 8 bzw. 9. Eine weitere Längsbohrung 20 im Pol dient in Verbindung mit einem (nicht dargestellten) Gewindebolzen zur stirnseitigen Befestigung der Polspule 41.

Die Verspannung des Pols im achsfernen Bereich unterscheidet sich im wesentlichen von derjenigen im achsnahen Bereich durch die besondere Ausbildung der Druckverteilungselemente. Dort sind zwei Spannbolzen 21 (nur einer in Fig. 1 sichbar) mit Innengewinden an beiden Enden versehen. Mittels Innensechskantschrauben 23, 24 sind beidseits kombinierte Spann- und Abstützelemente 26, 27 mit im wesentlichen zylindrischer Aussenkontur mit den Spannbolzen 21 verschraubt.

Das kombinierte Spann- und Abstützelement weist am inneren Ende eine exzentrische Bohrung 29 bzw. 30 auf, in welche die Enden des Spannbolzens 21 bzw. 22 eintauchen. Koaxial zu dieser Bohrung ist von der Aussenseite her eine weitere Bohrung 31 bzw. 32 zur Aufnahme des Schraubenkopfes der Schrauben 23, 24 vorgesehen.

Die Elemente 26, 27 liegen mit ihrem zylindrischen Teil vollständig innerhalb von Bohrungen 33, 34 im achsfernen Abschnitt des Pols. Ein umlaufender Bund 35, 36 dient als Spannfläche. Jedes Spann- und Abstützelement weist einen zylinderabschnittförmigen Vorsprung 38, 39 auf, der einstückig mit dem Element ausgebildet ist. Diese Vorsprünge dienen zur radialen Abstützung der Polspule 41 (in Fig. 2 schematisch angedeutet).

Der Vollständigkeit halber ist in Fig. 1 noch eine Verdrehsicherung in Form eines Stiftes 42 für die Spannbolzen 21 eingezeichnet.

Nahe der Poloberfläche sind in axialen Bohrungen Dämpferstäbe 43 eingeschoben. An den Stirnseiten der Elemente 26, 27 bzw. 38, 39 sind Dämpferbleche 44, 45 befestigt, in denen flexible Verbindungsstücke 46 eingelötet oder eingeschweisst sind, die ihrerseits mit den Enden der Dämpferstäbe 43 verlötet sind (Fig. 3).

Es versteht sich von selbst, dass abhängig von der Breite des Pols mehr oder weniger Spannelemente vorgesehen sein können, auch die äussere Formgebung der kombinierten Spann- und Abstützelemente 26, 27, 28 kann den jeweiligen Bedürfnissen und örtlichen Gegebenheiten angepasst werden, ohne den Rahmen der Erfindung zu verlassen.

## Patentansprüche

1. Lamellierter Pol für eine elektrische Maschine mit ausgeprägten Polen mit folgenden Merkmalen :
- im achsnahen Aschnitt des Pols sind erste Spannbolzen (8,9) mit zugehörigen Spannmuttern (10,11) vorgesehen, welche erste Spannbolzen (8,9) den Pol in Längsrichtung durchsetzen und in Bohrungen (19) liegen mit einem Innendurchmesser, der dem Bolzenaussendurchmesser entspricht,
- die Spannmuttern weisen einen Passzylinder (13,14) auf, der vollständig innerhalb einer Bohrung entsprechenden Durchmessers im Endbereich (3,4) des Pols liegt,
- die Passzylinder (13,14) gehen aussen in eine flanschartige Erweiterung (17,18) über, die als Druckverteilungselement wirkt,
- im achsfernen Abschnitt des Pols sind zweite Spannbolzen (21,22) vorgesehen, die endseitig mit kombinierten Spann- und Druckverteilungselementen (26,27) zusammenwirken,
- die kombinierten Spann- und Druckverteilungselemente (26,27) weisen einen innerhalb des Polkörpers liegenden zylindrischen Abschnitt auf, mit einem umlaufenden Bund (35,36), der als Spannfläche dient,
- die kombinierten Spann- und Druckverteilungselemente (26,27) sind mit nach aussen weisenden Vorsprüngen (38,39) zur Abstützung der Polspule (41) versehen.

2. Lamellierter Pol nach Anspruch 1, dadurch gekennzeichnet, dass an den nach aussen weisenden Vorsprüngen (38,39) das Dämpferblech (44,45) und die zugehörigen flexiblen Verbindungsstücke (46) zu den Kurzschluss-Stäben (43) der Dämpferwicklung angeordnet sind.

## Claims

1. Laminated pole for an electric machine having salient poles having the following features:
- in the section of the pole close to the axis, first clamping bolts (8, 9) with associated clamping nuts (10, 11) are provided, which first clamping bolts (8, 9) pass through the pole in the longitudinal direction and are located in holes (19) having an inside diameter which corresponds to the outside diameter of the bolts,
- the clamping nuts exhibit a fitting cylinder (13, 14) which is located completely within a hole of corresponding diameter in the end area (3, 4) of the pole,
- the fitting cylinders (13, 14) pass on the outside into a flange-like extension (17, 18) which acts as pressure distribution element,
- in the section of the pole remote from the axis, second clamping bolts (21, 22) are provided which interact at the end with combined clamping and pressure distribution elements (26, 27),
- the combined clamping and pressure distribution elements (26, 27) exhibit a cylindrical section located within the pole body, with an encircling collar (35, 36) which is used as clamping surface,
- the combined clamping and pressure distribution elements (26, 27) are provided with outwardly pointing projections (38, 39) for supporting the pole coil (41).

2. Laminated pole according to Claim 1, characterised in that the damper plate (44, 45) and the associated flexible link pieces (46) to the short-circuit rods (43) of the damper winding are arranged at the projections (38, 39) pointing outwards.

## Revendications

1. Pôle feuilleté pour une machine électrique à pôles saillants, avec les caractéristiques suivantes:
- dans la section du pôle proche de l'axe, il est prévu des premiers boulons de serrage (8, 9) avec des écrous de serrage appropriés (10, 11), premiers boulons de serrage (8, 9) qui traversent le pôle dans le sens longitudinal et sont logés dans des alésages (19) avec un diamètre intérieur qui correspond au diamètre extérieur des boulons,
- les écrous de serrage présentent un cylindre d'ajustement (13, 14) qui se trouve entièrement à l'intérieur d'un alésage de diamètre correspondant dans la région d'extrémité (3, 4) du pôle,
- les cylindres d'ajustement (13, 14) passent à l'extérieur par un élargissement en forme de bride (17, 18), qui agit comme élément de répartition de la pression,
- dans la section du pôle éloignée de l'axe, il est prévu des seconds boulons de serrage (21, 22), qui collaborent à leur extrémité avec des éléments combinés de serrage et de répartition de la pression (26, 27),
- les éléments combinés de serrage et de répartition de la pression (26, 27) présentent un tronçon cylindrique situé à l'intérieur du corps du pôle, avec un rebord périphérique (35, 36), qui sert de face de serrage,
- les éléments combinés de serrage et de répartition de la pression (26, 27) sont pourvus de saillies (38, 39) tournées vers l'extérieur pour supporter la bobine polaire (41).

2. Pôle feuilleté suivant la revendication 1, caractérisé en ce que, sur les saillies (38, 39) tournées vers l'extérieur, sont disposées la tôle d'amortissement (44, 45) et les pièces flexibles correspondantes (46) de liaison avec les barres de court-circuit (43) de l'enroulement d'amortissement.
